(19) Europäisches Patentamt
European Patent Office
Office européen des brevets

(11) EP 4 394 987 B1

(12) EUROPEAN PATENT SPECIFICATION

(45) Date of publication and mention of the grant of the patent:
**10.12.2025 Bulletin 2025/50**

(21) Application number: **22883994.0**

(22) Date of filing: **18.10.2022**

(51) International Patent Classification (IPC):
***H01M 10/0567*** *(2010.01)* ***H01M 10/052*** *(2010.01)*
***H01M 4/525*** *(2010.01)* ***H01M 4/505*** *(2010.01)*
***H01M 10/0525*** *(2010.01)*

(52) Cooperative Patent Classification (CPC):
**H01M 10/052; H01M 4/505; H01M 4/525; H01M 10/0525; H01M 10/0567;** Y02E 60/10

(86) International application number:
**PCT/KR2022/015888**

(87) International publication number:
**WO 2023/068772 (27.04.2023 Gazette 2023/17)**

(54) **NON-AQUEOUS ELECTROLYTE SOLUTION FOR LITHIUM SECONDARY BATTERY AND LITHIUM SECONDARY BATTERY INCLUDING THE SAME**

NICHTWÄSSRIGE ELEKTROLYTLÖSUNG FÜR LITHIUMSEKUNDÄRBATTERIEN UND LITHIUMSEKUNDÄRBATTERIEN MIT DERSELBEN

SOLUTION ÉLECTROLYTIQUE NON AQUEUSE POUR BATTERIE SECONDAIRE AU LITHIUM ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.10.2021 KR 20210142019**

(43) Date of publication of application:
**03.07.2024 Bulletin 2024/27**

(73) Proprietor: **LG Energy Solution, Ltd.**
**Seoul 07335 (KR)**

(72) Inventors:
- **KANG, Yoo Sun**
**Daejeon 34122 (KR)**
- **LEE, Chul Haeng**
**Daejeon 34122 (KR)**
- **LEE, Jung Hoon**
**Daejeon 34122 (KR)**
- **PARK, Sol Ji**
**Daejeon 34122 (KR)**
- **LEE, Jae Won**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
**CN-A- 111 740 162** **KR-A- 20150 046 050**
**KR-A- 20160 040 112** **KR-A- 20160 076 192**
**KR-A- 20200 045 843** **US-A1- 2021 249 689**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 394 987 B1

## Description

[Technical Field]

Cross-reference to Related Applications

This application claims priority from Korean Patent Application No. 10-2021-0142019, filed on October 22, 2021.

Technical Field

The present disclosure relates to a non-aqueous electrolyte solution for a lithium secondary battery which includes an additive capable of forming a stable film on the surface of a positive electrode and a negative electrode, and a lithium secondary battery in which high-temperature storage safety is improved by including the same.

## [BACKGROUND ART]

There is a need to develop technology for efficiently storing and utilizing electrical energy as personal IT devices and computer networks are developed with the recent development of information society and the accompanying dependency of society as a whole on the electrical energy is increased.

Particularly, studies of lithium ion batteries, which are getting the spotlight as clean energy with low carbon dioxide emissions, have been extensively conducted as an interest in solving environmental problems and realizing a sustainable circular society emerges.

Since lithium ion batteries may be miniaturized to be applicable to a personal IT device, have high energy density and operating voltage, the lithium ion batteries have been adopted as power sources for electric vehicles as well as power sources for notebook computers and mobile phones.

The lithium ion battery is composed of a positive electrode including a lithium-containing transition metal oxide as a main component, a negative electrode which uses a lithium alloy or a carbonaceous material typified by graphite, a separator disposed between the positive electrode and the negative electrode, and a non-aqueous electrolyte solution used as a medium through which lithium (Li) ions move. Here, an electrolyte, such as lithium hexafluorophosphate (LiPF6), which is dissolved in an organic solvent having a high dielectric constant, such as ethylene carbonate or dimethyl carbonate, is widely used as the non-aqueous electrolyte solution.

Since an electrolyte such as LiPF6, etc. is vulnerable to heat or moisture, it reacts with moisture present in the cell or is thermally decomposed to generate Lewis acids such as PF5. Such Lewis acids erode a passivation film made at an electrode-electrolyte interface, thereby inducing the elution of transition metal ions from a positive electrode.

Such eluted transition metal ions promote the decomposition of the electrolyte solvent to accelerate gas generation or are re-deposited on the positive electrode to increase the resistance of the positive electrode. Also, the transition metal ions are electro-deposited on the negative electrode after moving to the negative electrode through the electrolyte solution. This brings out an additional consumption of lithium ions or a resistance increase caused by self-discharge of the negative electrode, destruction and regeneration of a solid electrolyte interphase (SEI).

Thus, there is a need for a non-aqueous electrolyte solution composition capable of improving battery performances such as high rate charge and discharge characteristics as well as safety by forming a stable film on the surface of the electrode to suppress the elution of the transition metals, or by suppressing the electrodeposition of the eluted transition metal ions on the negative electrode while removing by-products (such as HF and PF5) generated by thermal decomposition of lithium salts.

CN 111740162 describes an electrolyte and an electrochemical device containing the electrolyte. The electrolytes described therein contain isocyanate and ether nitrile compounds containing an ester structure.

## [DISCLOSURE OF THE INVENTION]

## [TECHNICAL PROBLEM]

In order to solve the above problem, the present disclosure aims to provide a non-aqueous electrolyte solution for a lithium secondary battery comprising an additive capable of effectively removing a decomposition product of a lithium salt while forming a stable ion conductive film on the electrode surface.

The present disclosure also aims to provide a lithium secondary battery in which high-temperature storage safety is improved by including the non-aqueous electrolyte solution for a lithium secondary battery.

**[TECHNICAL SOLUTION]**

According to an aspect of the present disclosure, the present disclosure provides a non-aqueous electrolyte solution for a lithium secondary battery comprising:

a lithium salt;
a non-aqueous organic solvent; and
a compound represented by Formula 1:

(Formula 1)

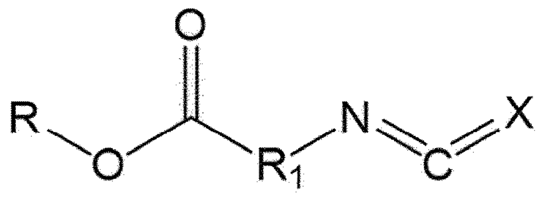

In Formula 1,
R is an alkyl group having 1 to 6 carbon atoms, an alkenyl group having 1 to 6 carbon atoms or an alkynyl group having 1 to 6 carbon atoms,
R1 is an alkylene group having 1 to 3 carbon atoms, and
X is S.

According to another embodiment of the present disclosure, there is provided a lithium secondary battery comprising: a negative electrode, a positive electrode, a separator disposed between the negative electrode and the positive electrode, and the non-aqueous electrolyte solution for a lithium secondary battery of the present disclosure.

**[ADVANTAGEOUS EFFECTS]**

The non-aqueous electrolyte solution of the present disclosure includes a compound containing an isothiocyanate (-NCS) terminal group(s) as an additive so that a stable film may be formed on the surfaces of positive and negative electrodes to reduce the deterioration of a SEI film while effectively scavenging Lewis acids generated as a decomposition product of an electrolyte salt.

Thus, when the non-aqueous electrolyte solution of the present disclosure is used, a lithium secondary battery in which high-temperature storage safety is improved by suppressing the elution of transition metals from the positive electrode may be achieved.

[MODE FOR CARRYING OUT THE INVENTION]

Hereinafter, the present disclosure will be described in more detail.

It will be understood that words or terms used in the specification and claims of the present disclosure shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Meanwhile, the terms used herein are used only to describe exemplary embodiments, and are not intended to limit the present disclosure. Singular forms are intended to include plural forms as well, unless the context clearly indicates otherwise. It should be appreciated that the terms such as "including", "comprising", or "having" as used herein are intended to embody specific features, numbers, steps, elements, and/or combinations thereof, and does not exclude existence or addition of other specific features, numbers, steps, elements, and/or combinations thereof.

Before describing the present disclosure, the expressions "a" and "b" in the description of "a to b carbon atoms" in the specification each denote the number of carbon atoms included in a specific functional group. That is, the functional group may include "a" to "b" carbon atoms.

For example, "an alkyl group having 1 to 5 carbon atoms" denotes an alkyl group containing 1 to 5 carbon atoms, i.e., $-CH_3$, $-CH_2CH_3$, $-CH_2CH_2CH_3$, $-CH_2(CH_3)CH_3$, $-CH(CH_3)CH_3$ and $-CH(CH_3)CH_2CH_3$ and the like.

Also, unless otherwise defined in the specification, the expression "substitution" denotes that at least one

hydrogen bonded to carbon is substituted with an element other than hydrogen, for example, an alkyl group having 1 to 4 carbon atoms or a fluorine element.

In the present specification, the expression "%" denotes wt % unless explicitly stated otherwise.

An amount of available lithium ions in a battery is reduced while transition metal ions are easily eluted from the positive electrode into the electrolyte solution due to the structural variation of the positive electrode according to repeated charge and discharge during secondary battery operation, which causes the degradation of the capacity of the battery. In particular, Lewis acids, etc. generated by the thermal decomposition of electrolyte salts deteriorates a passivation film such as a solid electrolyte interphase (SEI) film, which intensifies the elution of transition metal ions. Such eluted transition metal ions are re-deposited on the positive electrode to increase the resistance of the positive electrode or are electrodeposited on a surface of the negative electrode to destruct a solid electrolyte interphase (SEI) film which may leads to an internal short circuit. The decomposition reactions of the electrolyte solution caused by this series of reactions are promoted to increase gas generation, the interfacial resistance of the negative electrode, and the self-discharge of the negative electrode, thereby causing a low voltage failure.

The present disclosure aims at providing a non-aqueous electrolyte solution for a lithium secondary battery capable of suppressing the additional elution or electrodeposition of the transition metal ions by forming a robust film on a surface of the positive electrode and negative electrode and concurrently scavenging a Lewis acid, which is a cause of such degradation and failure behavior.

## Non-aqueous Electrolyte Solution for Lithium Secondary Battery

According to an embodiment, the present disclosure provides a non-aqueous electrolyte solution for a lithium secondary battery.

The non-aqueous electrolyte solution for a lithium secondary battery includes:

a lithium salt,
a non-aqueous organic solvent; and
a compound represented by Formula 1 below.

(Formula 1)

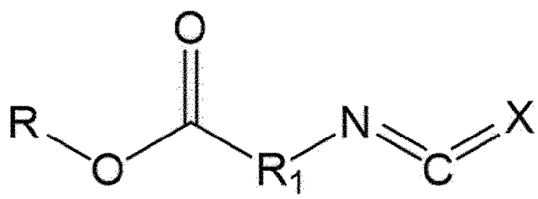

In Formula 1,

R is an alkyl group having 1 to 6 carbon atoms, an alkenyl group having 1 to 6 carbon atoms, or an alkynyl group having 1 to 6 carbon atoms,
R1 is an alkylene group having 1 to 3 carbon atoms, and
X is S.

### (1) Lithium Salt

Any lithium salt typically used in an electrolyte solution for a lithium secondary battery may be used as the lithium salt without limitation, and, for example, the lithium salt may include Li+ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_5^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$as an anion.

Specifically, the lithium salt may include at least one selected from the group consisting of LiCl, LiBr, LiI, $LiBF_4$, $LiClO_4$, $LiB_{10}Cl_{10}$, $LiAlCl_4$, $LiAlO_4$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (Lithium bis (fluorosulfonyl) imide, LiFSI), $LiN(SO_2CF_2CF_3)_2$ (lithium bis(perfluoroethanesulfonyl) imide, LiBETI) and $LiN(SO_2CF_3)_2$ (lithium bis(trifluoromethanesulfonyl) imide, LiTFSI), and more specifically, may include at least one selected from the group consisting of $LiBF_4$, $LiClO_4$, $LiPF_6$, $LiN(SO_2F)_2$, $LiN(SO_2CF_2CF_3)_2$ and $LiN(SO_2CF_3)_2$.

The lithium salt may be appropriately changed in a normally usable range, but may be included in a concentration of 0.8 M to 3.0 M, and specifically 1.0 M to 3.0 M in the electrolyte solution to obtain an optimum effect of forming a film for preventing corrosion of a surface of an electrode. In a case in which the concentration of the lithium salt satisfies the above range, viscosity of the non-aqueous electrolyte solution may be controlled so that optimum impregnability may be achieved, and an effect of improving capacity characteristics and cycle characteristics of the lithium secondary battery may be obtained by improving the mobility of lithium ions.

**(2) Non-aqueous Organic Solvent**

The non-aqueous organic solvent of the present disclosure may include a cyclic carbonate-based organic solvent, a linear carbonate-based organic solvent, or a mixed organic solvent thereof.

The cyclic carbonate-based organic solvent is a highly viscous organic solvent which may well dissociate the lithium salt in an electrolyte due to high permittivity, wherein specific examples thereof may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and may include ethylene carbonate among them.

Also, the linear carbonate-based organic solvent is an organic solvent having low viscosity and low permittivity, wherein typical examples thereof may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and may include dimethyl carbonate (DMC) among them.

In the present disclosure, a mixture of the cyclic carbonate-based organic solvent and the linear carbonate-based organic solvent may be used in a mixing ratio of 10:90 to 50:50 by volume, and specifically 15:85 to 30:70 by volume to secure the high ion conductivity of the non-aqueous electrolyte solution.

Furthermore, the non-aqueous organic solvent may further include at least one organic solvent of a linear ester-based organic solvent and a cyclic ester-based organic solvent, which have lower melting point and higher storage stability at high temperatures than the cyclic carbonate-based organic solvent and/or the linear carbonate-based organic solvent, to prepare an electrolyte solution having high ionic conductivity.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

The non-aqueous organic solvent may be used by adding an organic solvent typically used in an electrolyte solution for a lithium secondary battery without limitation, if necessary. For example, the non-aqueous solvent may further include at least one organic solvent selected from an ether-based organic solvent, an amide-based organic solvent, and a nitrile-based organic solvent.

**(3) Compound represented by Formula 1**

The non-aqueous electrolyte solution of the present disclosure may include a compound represented by Formula 1 below as a first additive.

[Formula 1]

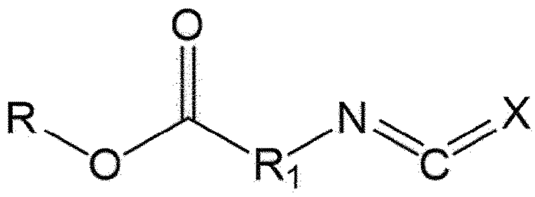

In Formula 1,

R is an alkyl group having 1 to 6 carbon atoms, an alkenyl group having 1 to 6 carbon atoms, or an alkynyl group having 1 to 6 carbon atoms,
R1 is an alkylene group having 1 to 3 carbon atoms, and
X is S.

As the compound represented by Formula 1 includes an isothiocyanate (-NCS) terminal group(s) containing a nitrogen element in the structure, the unshared electron pair of the nitrogen element reacts and combines with a Lewis acid, such as HF, generated as a decomposition product of an electrolyte salt to form a complex, thereby effectively scavenging Lewis acids. In addition, the compound represented by Formula 1 may form a stable passivation film while being reduced before the non-aqueous organic solvent on the surfaces of the negative electrode and positive electrode, therefore resulting in bringing out the effect of improving gas reduction and high-temperature cycles during high-temperature storage by suppressing the additional decomposition reaction of the electrolyte solution as well as suppressing the elution of the transition metals from the positive electrode.

Specifically, in Formula 1, R may be a substituted or unsubstituted alkyl group having 1 to 6 carbon atoms, or a substituted or unsubstituted alkynyl group having 1 to 6 carbon atoms.

Also, in Formula 1, R may be a substituted or unsubstituted alkyl group having 1 to 4 carbon atoms, or a substituted or unsubstituted alkynyl group having 1 to 4 carbon atoms.

Here, as a typical example, the substitutable substituent may be selected from an alkyl group having 1 to 4 carbon atoms and at least one fluorine.

Preferably, the compound represented by Formula 1 may be at least one of the compounds represented by Formula 1-3 to Formula 1-4.

[Formula 1-3]

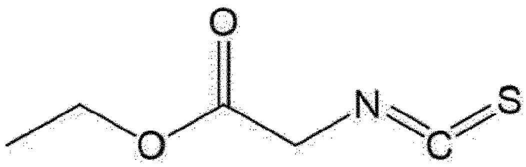

[Formula 1-4]

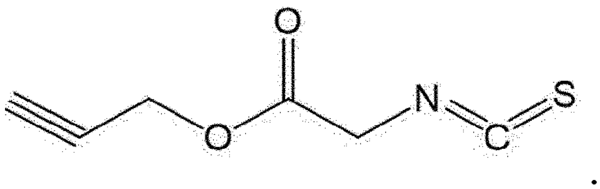

[Formula 1-1]

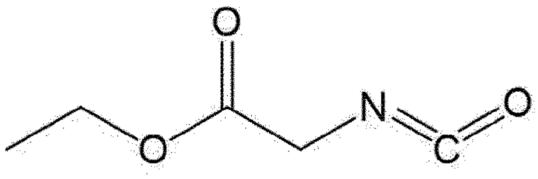

[Formula 1-2]

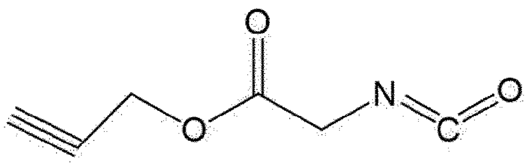

Formulae 1-1 and 1-2 are used in the reference examples described herein but are not according to Formula 1.

The compound represented by Formula 1 may be present in an amount of 0.3 wt% to 5.0 wt% based on the total weight of the non-aqueous electrolyte solution for a lithium secondary battery.

In a case in which the compound represented by Formula 1 is present in the above range, a secondary battery with further improved overall performance may be prepared. For example, if the content of the compound represented by Formula 1 is 0.3 wt% or less, the effect of forming a SEI is insignificant, and thus the effect of reducing gas and the effect of improving high-temperature cycle characteristics during high-temperature storage may be insignificant. Specifically, in a case in which the content of the compound represented by Formula 1 is 0.3 wt% or more, the effect of stabilizing or suppressing elution may be obtained when forming an SEI film. In a case in which the content of the compound represented by Formula 1 is 5.0 wt% or less, an increase in battery resistance may be effectively prevented by suppressing excessive film formation as well as preventing an increase in the viscosity of the electrolyte solution caused by the surplus compound while suppressing an increase in resistance as much as possible. Thus, the maximum effect of suppressing elution may be obtained within the increase in resistance which may be accommodated.

Specifically, the compound represented by Formula 1 may be present in an amount of 0.5 wt% to 3 wt% based on the total weight of the non-aqueous electrolyte solution for a lithium secondary battery.

**(4) Other Additive**

Also, in order to prevent the non-aqueous electrolyte solution from being decomposed to cause collapse of the negative electrode in a high output environment, or further improve low-temperature high-rate discharge characteristics, high-temperature stability, overcharge protection, and a battery swelling suppression effect at high temperatures, the non-aqueous electrolyte solution of the present disclosure may further include another additional second additives.

Examples of the other additive may be at least one selected from the group consisting of a cyclic carbonate-based compound, a halogen-substituted carbonate-based compound, a sultone-based compound, a sulfate-based compound, a phosphate-based or phosphite-based compound, a borate-based compound, a benzene-based compound, an amine-based compound, a silane-based compound, and a lithium salt-based compound.

The cyclic carbonate-based compound may include vinylene carbonate (VC) or vinyl ethylene carbonate (VEC).

The halogen-substituted carbonate-based compound may include fluoroethylene carbonate (FEC).

The sultone-based compound, for example, may include at least one selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound, for example, may include ethylene sulfate (Esa), trimethylene sulfate (TMS), or methyl trimethylene sulfate (MTMS).

The phosphate-based or phosphite-based compound, for example, may be at least one selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound, for example, may include tetraphenyl borate and lithium oxalyl difluoroborate (LiODFB) or lithium bis (oxalato) borate ($LiB(C_2O_4)_2$, LiBOB) capable of forming a film on the surface of the negative electrode.

The benzene-based compound may be fluorobenzene, and the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may include $LiPO_2F_2$ or $LiBF_4$.

In order to form a more robust SEI film on the surface of the negative electrode during an initial activation process, especially at least one selected from the group consisting of vinylene carbonate, vinylethylene carbonate, fluoroethylene carbonate (FEC), propene sultone, ethylene sulfate, $LiBF_4$ and lithium oxalyl difluoroborate (LiODFB) having an excellent effect of forming a film on the surface of the negative electrode, may be included among these other additives.

The other additive may be used by mixing two or more types of compounds, and may be included in an amount of 0.01 wt% to 20 wt%, and specifically 0.01 wt% to 10 wt% based on the total weight of the non-aqueous electrolyte solution.

If the other additive is present in the above range, a secondary battery with further improved overall performance may be prepared. For example, if the other additive is present in an amount of 0.01 wt% or more, there is an effect of improving durability of the SEI film, and if the other additive is present in an amount of 20 wt% or less, there is an effect of long-term maintenance and repair of the SEI within the increase in resistance which may be accommodated while suppressing the increase in resistance as much as possible.

**Lithium Secondary Battery**

Also, in another embodiment of the present disclosure, there is provided a lithium secondary battery including a positive electrode; a negative electrode; a separator disposed between the positive electrode and the negative electrode; and the non-aqueous electrolyte solution of the present disclosure described above.

After an electrode assembly, in which the positive electrode, the separator, and the negative electrode are

sequentially stacked, is formed and accommodated in a battery case, the lithium secondary battery of the present disclosure may be prepared by injecting the non-aqueous electrolyte solution of the present disclosure.

The lithium secondary battery of the present disclosure may be prepared according to a conventional method known in the art and used, and a method of preparing the lithium secondary battery of the present disclosure is specifically the same as that described later.

**(1) Positive Electrode**

The positive electrode according to the present disclosure may include a positive electrode active material layer including a positive electrode active material, and, if necessary, the positive electrode active material layer may further include a conductive agent and/or a binder.

The positive electrode active material is a compound capable of reversibly intercalating and deintercalating lithium, and specifically may include a lithium composite metal oxide including lithium and at least one metal selected from cobalt, manganese, nickel, or aluminum.

Specifically, the positive electrode active material may include a lithium-cobalt-based oxide (e.g., $LiCoO_2$, etc.), a lithium-manganese-based oxide (e.g., $LiMnO_2$, $LiMn_2O_4$, etc.), lithium-nickel-based oxide (e.g., $LiNiO_2$, etc.), a lithium-nickel-manganese-based oxide (e.g., $LiNi_{1-Y}Mn_YO_2$ (where 0<Y<1), $LiMn_{2-Z}Ni_ZO_4$ (where 0<Z<2)), a lithium-nickel-cobalt-based oxide (e.g., $LiNi_{1-Y1}Co_{Y1}O_2$ (where 0<Y1<1)), a lithium-manganese-cobalt-based oxide (e.g., $LiCo_{1-Y2}Mn_{Y2}O_2$ (where 0<Y2<1), $LiMn_{2-Z1}Co_{Z1}O_4$ (where 0<Z1<2)), a lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), or a lithium-nickel-cobalt-transition metal (M) oxide (e.g., $Li(Ni_{p2}Co_{q2}Mn_{r3}M_{S2})O_2$ (where M is selected from the group consisting of Al, Fe, V, Cr, Ti, Ta, Mg, Ti and Mo, and p2, q2, r3, and s2 are atomic fractions of each independent element, wherein 0<p2<1, 0<q2<1, 0<r3<1, 0<s2<1, p2+q2+r3+s2=1), and any one thereof or a compound of two or more thereof may be included.

Among these materials, in terms of the improvement of capacity characteristics and stability of the battery, the positive electrode active material may include at least one selected from the group consisting of a lithium-cobalt oxide, a lithium-manganese-based oxide, a lithium-nickel-manganese-cobalt-based oxide, and a lithium-nickel-cobalt-transition metal (M) oxide.

Specifically, the positive electrode active material may include at least one selected from a lithium-nickel-manganese-cobalt-based oxide in which a nickel content is 55 atm% or more and a lithium-nickel-cobalt-transition metal (M) oxide in which a nickel content is 55 atm% or more. Specifically, the positive electrode active material may include a lithium-nickel-manganese-cobalt-based oxide represented by Formula 2 below.

[Formula 2] $Li(Ni_aCo_bMn_cM_d)O_2$

In Formula 2,

M is W, Cu, Fe, V, Cr, Ti, Zr, Zn, Al, In, Ta, Y, La, Sr, Ga, Sc, Gd, Sm, Ca, Ce, Nb, Mg, B or Mo,
a, b, c and d are atomic fractions of each independent element, wherein $0.55\leq a<1$, $0<b\leq 0.3$, $0<c\leq 0.3$, $0\leq d\leq 0.1$, a+b+c+d=1.

Specifically, each of a, b, c and d may be $0.60\leq a\leq 0.95$, $0.01\leq b\leq 0.20$, $0.01\leq c\leq 0.20$, and $0\leq d\leq 0.05$.

Specifically, typical examples of the positive electrode active material may include at least one selected from the group consisting of $Li(Ni_{0.6}Mn_{0.2}Co_{0.2})O_2$, $Li(Ni_{0.7}Mn_{0.15}Co_{0.15})O_2$, $Li(Ni_{0.8}Mn_{0.1}Co_{0.1})O_2$ and $Li(Ni_{0.9}Co_{0.06}Mn_{0.03}Al_{0.01})O_2$.

The positive electrode active material may be included in an amount of 80 wt% to 99 wt%, specifically 90 wt% to 99 wt% based on a total weight of solid content in the positive electrode slurry. In a case in which the amount of the positive electrode active material is 80 wt% or less, since the energy density is reduced, the capacity may be reduced.

Any conductive agent may be used without particular limitation as the conductive agent as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers and potassium titanate whiskers; conductive metal oxide such as titanium oxide; or polyphenylene derivatives, may be used.

The conductive agent may be added in an amount of 1 wt% to 30 wt% based on the total weight of the solid content in the positive electrode active material layer.

The binder is a component that assists in the binding between the active material and the conductive agent and in

the binding with the current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The positive electrode of the present disclosure as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder and/or the conductive agent in a solvent, rolled and dried, or may be prepared by casting the positive electrode active material layer on a separate support and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

Furthermore, the solvent may include an organic solvent, such as N-methyl-2-pyrrolidone (NMP), and may be used in an amount such that desirable viscosity is obtained when the positive electrode active material as well as optionally the binder and the conductive agent are present. For example, the solvent may be included in an amount such that a concentration of the solid content in the active material slurry including the positive electrode active material as well as optionally the binder and the conductive agent is in a range of 10 wt% to 90 wt%, preferably, 30 wt% to 80 wt%.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

As the negative electrode active material, various negative electrode active materials used in the art, for example, a carbon-based negative electrode active material, a silicon-based negative electrode active material, or a mixture thereof may be used.

According to an embodiment, the negative electrode active material may include a carbon-based negative electrode active material, and, as the carbon-based negative electrode active material, various carbon-based negative electrode active materials used in the art, for example, a graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, the negative electrode active material may include at least one of natural graphite and artificial graphite, and the natural graphite and the artificial graphite are used together, adhesion with the current collector may be increased to suppress exfoliation of the active material.

According to another embodiment, the negative electrode active material may be used by including a silicon-based negative electrode active material with the carbon-based negative electrode active material.

The silicon-based negative electrode active material, for example, may include at least one selected from the group consisting of metallic silicon (Si), silicon oxide ($SiO_x$, where $0<x<2$), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Since the silicon-based negative electrode active material has higher capacity characteristics than the carbon-based negative electrode active material, better capacity characteristics may be obtained when the silicon-based negative electrode active material is further included. However, with respect to a negative electrode including the silicon-based negative electrode active material, it contains more O-rich components in the SEI film than a graphite negative electrode, and the SEI film containing the O-rich components tends to be more easily decomposed when a Lewis acid, such as HF or $PF_5$, is present in the electrolyte solution. Thus, with respect to the negative electrode including the silicon-based negative electrode active material, there is a need to suppress the formation of the Lewis acids, such as HF and $PF_5$, or remove (or scavenge) the generated Lewis acids in order to stably maintain the SEI film. Since the non-aqueous electrolyte solution

according to the present disclosure includes an electrolyte additive which forms a stable film on the positive electrode and negative electrode and has the excellent effect of scavenging Lewis acids, it may effectively suppress the decomposition of the SEI film when the negative electrode including the silicon-based active material is used.

A mixing ratio of the carbon-based negative electrode active material to the silicon-based negative electrode active material may be in a range of 50:50 to 99:1 as a weight ratio, preferably 85:15 to 95:5. In a case in which the mixing ratio of the carbon-based negative electrode active material to the silicon-based negative electrode active material satisfies the above range, since a volume expansion of the silicon-based negative electrode active material is suppressed while capacity characteristics are improved, excellent cycle performance may be secured.

As the negative electrode active material, at least one selected from the group consisting of lithium metal, an alloy of lithium and metal, a metal composite oxide, and a transition metal oxide may be used instead of the carbon-based negative electrode active material or the silicon-based negative electrode active material, if necessary.

As the alloy of lithium and metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn or an alloy of lithium and the metals may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3(0 \le x \le 1)$, $Li_xWO_2(0 \le x \le 1)$ and $Sn_xMe_{1-x}Me'_yO_z$ (Me: Mn, Fe, Pb, Ge; Me': Al, B, P, Si, Groups I, II and III elements of the periodic table, or halogen; $0<x\le 1$; $1\le y\le 3$; $1\le z\le 8$) may be used as the metal composite oxide.

The transition metal oxide may include lithium-containing titanium composite oxide (LTO), vanadium oxide, and lithium vanadium oxide.

The negative electrode active material may be present in an amount of 80 wt% to 99 wt% based on a total weight of solid content in the negative electrode slurry.

The conductive agent is a component for further improving the conductivity of the negative electrode active material, wherein the conductive agent may be added in an amount of 1 wt% to 20 wt% based on the total weight of the solid content in the negative electrode active material layer. Any conductive agent may be used without particular limitation so long as it has conductivity without causing adverse chemical changes in the battery, and, for example, a conductive material, such as: graphite such as natural graphite, artificial graphite; carbon black such as acetylene black, Ketjen black, channel black, furnace black, lamp black, or thermal black; conductive fibers such as carbon fibers or metal fibers; conductive powder such as fluorocarbon powder, aluminum powder, or nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 1wt% to 30wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder such as polyvinyl alcohol; a polyolefin-based binder including polyethylene or polypropylene; a polyimide-based binder; a polyester-based binder; and a silane-based binder.

The negative electrode may be prepared by a method of preparing a negative electrode which is known in the art. For example, the negative electrode may be prepared by a method in which a negative electrode collector is coated with a negative electrode active material slurry, which is prepared by dissolving or dispersing the negative electrode active material as well as selectively the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector may typically have a thickness of 3 $\mu$m to 500 $\mu$m. The negative electrode collector is not particularly limited as long as it has high conductivity without causing adverse chemical changes in the battery, and for example, copper, stainless steel, aluminum, nickel, titanium, fired carbon, copper or stainless steel that is surface-treated with one of carbon, nickel, titanium, silver, or the like, and an aluminum-cadmium alloy may be used. Similar to the positive electrode collector, microscopic irregularities may be formed on the surface of the collector to improve the adhesion of the negative electrode active material, and the negative electrode collector, for example, may be used in various shapes such as that of a film, a sheet, a foil, a net, a porous body, a foam body, a non-woven fabric body, and the like.

The solvent may include water or an organic solvent, such as NMP and alcohol, and may be used in an amount such that desirable viscosity is obtained when the negative electrode active material as well as optionally the binder and the conductive agent are present. For example, the solvent may be included in an amount such that a concentration of the solid content in the active material slurry including the negative electrode active material as well as optionally the binder and the conductive agent is in a range of 50 wt% to 75 wt%, preferably, 40 wt% to 70 wt%.

### (3) Separator

A typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator included in the lithium secondary battery of the present disclosure, and a typical porous nonwoven fabric, for example, a nonwoven fabric formed of high melting point glass fibers or polyethylene terephthalate fibers may be used, but the present disclosure is not limited thereto.

A shape of the lithium secondary battery of the present disclosure is not particularly limited, but a cylindrical type using a can, a prismatic type, a pouch type, or a coin type may be used.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

## Examples

### Example 1. (Reference example)

(Preparation of Non-aqueous Electrolyte Solution for Lithium Secondary Battery)

After dissolving $LiPF_6$ in a non-aqueous organic solvent, in which ethylene carbonate (EC) and dimethyl carbonate (DMC) were mixed in a volume ratio of 30:70 such that a concentration of the $LiPF_6$ was 1.0 M, a non-aqueous electrolyte solution was prepared by adding 0.3 wt% of a compound represented by Formula 1-1, 2.0 wt% of vinylene carbonate (VC) and 1.0 wt% of 1,3-propane sultone (PS) (see Table 1 below).

(Preparation of Secondary Battery)

A positive electrode active material ($Li(Ni_{0.8}Mn_{0.1}Co_{0.1})O_2$), a conductive agent (carbon black), and a binder(polyvinylidene fluoride) were added to N-methyl-2-pyrrolidone (NMP) as a solvent, at a weight ratio of 97.5:1:1.5 to prepare a positive electrode slurry (solid content:50 wt%). A 12 μm thick positive electrode collector (Al thin film) was coated with the positive electrode slurry, dried, and roll-pressed to prepare a positive electrode.

A negative electrode active material (graphite: SiO = 90:10 weight ratio), a binder (SBR-CMC), and a conductive agent (carbon black) were added to water as a solvent at a weight ratio of 97.5:1.5:1.0 to prepare a negative electrode slurry (solid content: 60 wt%). A 6 μm thick negative electrode collector (Cu thin film) was coated with the negative electrode slurry, dried, and roll-pressed to prepare a negative electrode.

After an electrode assembly was prepared by sequentially stacking the positive electrode, a polyolefin-based porous separator coated with inorganic particles ($Al_2O_3$), and the negative electrode, the electrode assembly was wound as a jelly-roll type and was put in a cylindrical-type battery case, and the above-prepared non-aqueous electrolyte solution for a lithium secondary battery was injected to prepare a cylindrical-type lithium secondary battery having a driving voltage of 4.2V or higher.

### Example 2. (Reference example)

A non-aqueous electrolyte solution for a lithium secondary battery and a cylindrical-type lithium secondary battery including the same were prepared in the same manner as in Example 1 except that the above-prepared non-aqueous electrolyte solution for a lithium secondary battery was prepared by including a compound represented by Formula 1-2 instead of the compound represented by Formula 1-1.

### Example 3.

A non-aqueous electrolyte solution for a lithium secondary battery and a cylindrical-type lithium secondary battery including the same were prepared in the same manner as in Example 1 except that the above-prepared non-aqueous electrolyte solution for a lithium secondary battery was prepared by including a compound represented by Formula 1-3 instead of the compound represented by Formula 1-1.

**Example 4.**

A non-aqueous electrolyte solution for a lithium secondary battery and a cylindrical-type lithium secondary battery including the same were prepared in the same manner as in Example 1 except that the above-prepared non-aqueous electrolyte solution for a lithium secondary battery was prepared by including a compound represented by Formula 1-4 instead of the compound represented by Formula 1-1.

**Example 5. (Reference example)**

A non-aqueous electrolyte solution for a lithium secondary battery and a cylindrical-type lithium secondary battery including the same were prepared in the same manner as in Example 1 except that after dissolving $LiPF_6$ in a non-aqueous organic solvent, in which ethylene carbonate (EC) and dimethyl carbonate (DMC) were mixed in a volume ratio of 30:70 such that a concentration of the $LiPF_6$ was 1.0 M, a non-aqueous electrolyte solution was prepared by adding 5.0 wt% of a compound represented by Formula 1-1, 2.0 wt% of vinylene carbonate (VC) and 1.0 wt% of 1,3-propane sultone (PS).

**Example 6. (Reference example)**

A non-aqueous electrolyte solution for a lithium secondary battery and a cylindrical-type lithium secondary battery including the same were prepared in the same manner as in Example 5 except that the above-prepared non-aqueous electrolyte solution for a lithium secondary battery was prepared by including a compound represented by Formula 1-2 instead of the compound represented by Formula 1-1.

**Example 7.**

A non-aqueous electrolyte solution for a lithium secondary battery and a cylindrical-type lithium secondary battery including the same were prepared in the same manner as in Example 5 except that the above-prepared non-aqueous electrolyte solution for a lithium secondary battery was prepared by including a compound represented by Formula 1-3 instead of the compound represented by Formula 1-1.

**Example 8.**

A non-aqueous electrolyte solution for a lithium secondary battery and a cylindrical-type lithium secondary battery including the same were prepared in the same manner as in Example 5 except that the above-prepared non-aqueous electrolyte solution for a lithium secondary battery was prepared by including a compound represented by Formula 1-4 instead of the compound represented by Formula 1-1.

**Comparative Example 1.**

A non-aqueous electrolyte solution for a lithium secondary battery and a cylindrical-type lithium secondary battery including the same were prepared in the same manner as in Example 1 except that after dissolving $LiPF_6$ in a non-aqueous organic solvent, in which ethylene carbonate (EC) and dimethyl carbonate (DMC) were mixed in a volume ratio of 30:70 such that a concentration of the $LiPF_6$ was 1.0 M, a non-aqueous electrolyte solution was prepared by adding 2.0 wt% of vinylene carbonate (VC) and 1.0 wt% of 1,3-propane sultone (PS).

**Comparative Example 2.**

A non-aqueous electrolyte solution for a lithium secondary battery and a cylindrical-type lithium secondary battery including the same were prepared in the same manner as in Example 1 except that the above-prepared non-aqueous electrolyte solution for a lithium secondary battery was prepared by including a compound represented by Formula 3 below instead of the compound represented by Formula 1-1.

[Formula 3]

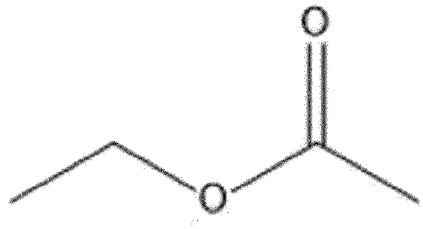

Comparative Example 3.

A non-aqueous electrolyte solution for a lithium secondary battery and a cylindrical-type lithium secondary battery including the same were prepared in the same manner as in Example 1 except that the above-prepared non-aqueous electrolyte solution for a lithium secondary battery was prepared by including a compound represented by Formula 4 below instead of the compound represented by Formula 1-1.

[Formula 4]

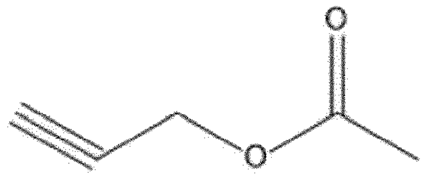

**Comparative Example 4.**

A non-aqueous electrolyte solution for a lithium secondary battery and a cylindrical-type lithium secondary battery including the same were prepared in the same manner as in Example 5 except that the above-prepared non-aqueous electrolyte solution for a lithium secondary battery was prepared by including a compound represented by Formula 4 instead of the compound represented by Formula 1-1.

[Table 1]

| | Lithium salt | Non-aqueous organic solvent | Additive | | Other additive | |
|---|---|---|---|---|---|---|
| | | | Formula | Amount (wt%) | Type | Total amount (wt%) |
| Example 1 | 1.0 M $LiPF_6$ | EC:DMC = 30:70 volume ratio | 1-1 | 0.3 | VC/PS | 2.0/1.0 |
| Example 2 | | | 1-2 | 0.3 | | |
| Example 3 | | | 1-3 | 0.3 | | |
| Example 4 | | | 1-4 | 0.3 | | |
| Example 5 | | | 1-1 | 5.0 | | |
| Example 6 | | | 1-2 | 5.0 | | |
| Example 7 | | | 1-3 | 5.0 | | |
| Example 8 | | | 1-4 | 5.0 | | |
| Comparative Example 1 | | | - | - | | |
| Comparative Example 2 | | | 3 | 0.3 | | |
| Comparative Example 3 | | | 4 | 0.3 | | |
| Comparative Example 4 | | | 4 | 5.0 | | |

In Table 1, the abbreviation of each compound has the following meaning. Examples 1, 2, 5 and 6 are reference examples.

EC: ethylene carbonate

DMC: dimethyl carbonate

VC: vinylene carbonate

PS: 1,3-propane sultone

## Experimental Examples

### Experimental Example 1. Evaluation of Capacity Retention Rate after High-Temperature (60°C) Storage

After each of the secondary batteries prepared in Examples 1 to 8 and Comparative Examples 1 to 4 was charged at a rate of 0.5C to 4.2 V under a constant current/constant voltage condition at 25° C, each secondary battery was discharged at a rate of 0.5C to 2.5 V under a constant current condition, and the measured discharge capacity was then defined as an initial discharge capacity.
Subsequently, after each lithium secondary battery was charged to a SOC 100% under the same charging conditions described above and was stored at the high temperature of 60°C for 30 days.
Next, each lithium secondary battery was charged at a rate of 0.5C to 4.2 V under a constant current/constant voltage condition at 25°C, each secondary battery was discharged at a rate of 0.5C to 2.5 V under a constant current condition, and the measured discharge capacity was then defined as a discharge capacity after high temperature storage.
A capacity retention was calculating by substituting the measured initial discharge capacity and discharge capacity after high temperature storage to Equation 1 below, and the results thereof are presented in Table 2 below.

$$\text{Capacity retention rate (\%)} = (\text{discharge capacity after high temperature storage} / \text{initial discharge capacity}) \times 100 \quad \text{[Equation 1]}$$

[Table 2]

| | Capacity retention rate (%) after high temperature storage |
|---|---|
| Example 1 | 90.3 |
| Example 2 | 92.4 |
| Example 3 | 88.6 |
| Example 4 | 89.7 |
| Example 5 | 86.1 |
| Example 6 | 87.9 |
| Example 7 | 86.4 |
| Example 8 | 88.1 |
| Comparative Example 1 | 85.2 |
| Comparative Example 2 | 83.4 |
| Comparative Example 3 | 84.7 |
| Comparative Example 4 | 82.4 |
| Examples 1, 2, 5 and 6 are reference examples. | |

Referring to Table 2 above, it may be understood that the lithium secondary batteries prepared in Examples 1 to 8 of the present disclosure had excellent capacity retention rates after high temperature storage compared to those prepared in Comparative Examples 1 to 4.
In particular, under the condition that the same additive amounts were the same, it may be understood that the

lithium secondary batteries of Examples 1 to 4 had excellent capacity retention rates after high-temperature storage compared to those of Comparative Examples 2 and 3, and the secondary batteries of Examples 5 to 8 had excellent capacity retention rates after high-temperature storage compared to those of Comparative Example 4.

**Experimental Example 2. Evaluation of Resistance Increase Rate after High-Temperature (60°C) Storage**

After each of the lithium secondary batteries prepared in Examples 1 to 8 and Comparative Examples 1 to 4 was charged at a rate of 0.5C to 4.2V under a constant current/constant voltage condition at 25°C, each secondary battery was discharged at a rate of 0.5C to 2.5V under a constant current condition to set a charge status of the battery to a SOC 50%. Subsequently, a voltage drop, which was obtained in a state in which each lithium secondary battery was subjected to a discharge pulse at a constant current of 0.5C for 10 seconds, was measured to obtain an initial resistance value.
Subsequently, after each lithium secondary battery was charged to a SOC of 100% under the same charging conditions described above, and was stored at the high temperature of 60°C for 30 days.
Next, each lithium secondary battery was charged at a rate of 0.5C to 4.2 V under a constant current/constant voltage condition at 25°C, each secondary battery was discharged at a rate of 0.5C to 2.5 V under a constant current condition to set a charge status of the battery to a SOC 50%. Subsequently, a voltage drop, which was obtained in a state in which each lithium secondary battery was subjected to a discharge pulse at a constant current of 0.5C for 10 seconds, was measured to obtain a resistance value after high temperature storage.
A resistance increase rate was calculated by substituting the measured initial resistance value and resistance value after high temperature storage to Equation 2 below, and the results thereof are presented in Table 3 below.

Resistance increase rate (%) = {(resistance after high-temperature storage- initial resistance)/initial discharge capacity}$\times$100 [Equation 2]

[Table 3]

| | Resistance increase rate (%) after high temperature storage |
|---|---|
| Example 1 | 27.7 |
| Example 2 | 28.5 |
| Example 3 | 28.3 |
| Example 4 | 29.0 |
| Example 5 | 31.4 |
| Example 6 | 32.8 |
| Example 7 | 30.5 |
| Example 8 | 33.7 |
| Comparative Example 1 | 35.4 |
| Comparative Example 2 | 30.6 |
| Comparative Example 3 | 34.7 |
| Comparative Example 4 | 36.6 |
| Examples 1, 2, 5 and 6 are reference examples. | |

Referring to Table 3 above, it may be understood that the lithium secondary batteries of Examples 1 to 8 of the present disclosure had improved resistance increase rates after high temperature storage compared to that of Comparative Example 1.
It may be understood that under the condition that the additive amounts were the same, the lithium secondary batteries prepared in Examples 1 to 4 had improved resistance increase rates after high temperature storage compared to those of Comparative Examples 2 and 3, and the secondary batteries of Examples 5 to 8 had improved resistance increase rates after high temperature storage compared to that of Comparative Example 4.

**Experimental Example 3. Evaluation of Gas Generation Amount after High-Temperature (60°C) Storage**

After the secondary batteries prepared in Examples 1 to 8 and Comparative Examples 1 to 4 were charged to a SOC 100%, and were stored at the high temperature of 60°C for 30 days.

Subsequently, the gas generation amounts such as CO and $CO_2$ in the batteries were measured. The relative gas generation amount of each of the batteries was measured based on the gas generation amount measured in Comparative Example 1, and the results are presented in Table 4 below.

[Table 4]

| | Gas generation amount (%) after high temperature storage |
|---|---|
| Example 1 | 58.8 |
| Example 2 | 49.0 |
| Example 3 | 60.3 |
| Example 4 | 50.5 |
| Example 5 | 81.4 |
| Example 6 | 75.9 |
| Example 7 | 79.4 |
| Example 8 | 79.6 |
| Comparative Example 1 | - |
| Comparative Example 2 | 88.9 |
| Comparative Example 3 | 78.6 |
| Comparative Example 4 | 85.7 |
| Examples 1, 2, 5 and 6 are reference examples. | |

Referring to Table 4 above, it may be understood that under the condition that the additive amounts were the same, the lithium secondary batteries prepared in Examples 1 to 4 had decreased gas generation amounts after high temperature storage compared to those of Comparative Examples 2 and 3, and the secondary batteries of Examples 5 to 8 had decreased gas generation amounts after high temperature storage compared to that of Comparative Example 4.

**Experimental Example 4. Evaluation of Capacity Retention Rate after High-rate Charging and Discharging at High Temperature (40°C)**

The lithium secondary batteries prepared in Examples 1 to 8 and Comparative Examples 1 to 4 were charged at a rate of 1.0C to 4.2V under a constant current/constant voltage condition and were discharged at a rate of 1.0C to 2.85V under a constant current condition at a high temperature (40°C) 50 times, respectively. The discharge capacity measured when performed once was set as an initial capacity.

Subsequently, a capacity retention rate was measured by substituting the initial discharge capacity (100%) and $50^{th}$ discharge capacity to Equation 1 above, and the results thereof are presented in Table 5 below.

[Table 5]

| | Capacity retention rate (%) after high-temperature and high-rate charging and discharging |
|---|---|
| Example 1 | 85.2 |
| Example 2 | 88.9 |
| Example 3 | 84.3 |
| Example 4 | 88.7 |
| Example 5 | 83.2 |
| Example 6 | 86.1 |

(continued)

| | Capacity retention rate (%) after high-temperature and high-rate charging and discharging |
|---|---|
| Example 7 | 83.3 |
| Example 8 | 87.2 |
| Comparative Example 1 | 61.3 |
| Comparative Example 2 | 63.2 |
| Comparative Example 3 | 72.4 |
| Comparative Example 4 | 70.8 |
| Examples 1, 2, 5 and 6 are reference examples. | |

Referring to Table 5 above, it may be understood that the lithium secondary batteries prepared in Examples 1 to 8 of the present disclosure had superior capacity retention rates after high-temperature and high-rate charging and discharging compared to those of Comparative Examples 1 to 4.

## Claims

1. A non-aqueous electrolyte solution for a lithium secondary battery, the non-aqueous electrolyte solution comprising:

   a lithium salt;
   a non-aqueous organic solvent; and
   a compound represented by Formula 1:

   [Formula 1]

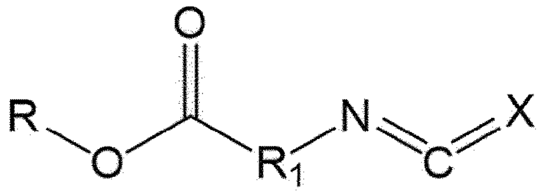

   In Formula 1,
   R is a substituted or unsubstituted alkyl group having 1 to 6 carbon atoms, a substituted or unsubstituted alkenyl group having 1 to 6 carbon atoms, or a substituted or unsubstituted alkynyl group having 1 to 6 carbon atoms,
   $R_1$ is an alkylene group having 1 to 3 carbon atoms, and
   X is S.

2. The non-aqueous electrolyte solution for a lithium secondary battery of claim 1, wherein, in Formula 1, R is a substituted or unsubstituted alkyl group having 1 to 6 carbon atoms, or a substituted or unsubstituted alkynyl group having 1 to 6 carbon atoms.

3. The non-aqueous electrolyte solution for a lithium secondary battery of claim 1, wherein, in Formula 1, R is a substituted or unsubstituted alkyl group having 1 to 4 carbon atoms, or a substituted or unsubstituted alkynyl group having 1 to 4 carbon atoms.

4. The non-aqueous electrolyte solution for a lithium secondary battery of claim 1, wherein, in Formula 1, the substitutable substituent is at least one selected from the group consisting of an alkyl group having 1 to 4 carbon atoms and at least one fluorine.

5. The non-aqueous electrolyte solution for a lithium secondary battery of claim 1, wherein the compound represented by Formula 1 is at least one of compounds represented by Formula 1-3 to Formula 1-4 below:

[Formula 1-3]

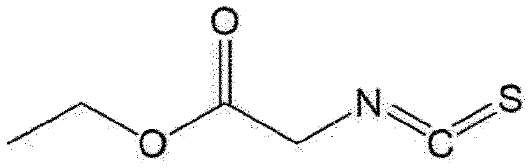

[Formula 1-4]

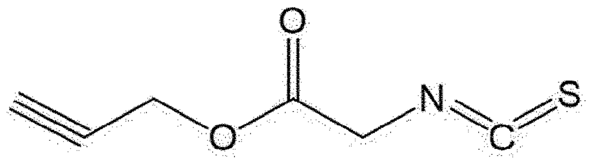

.

6. The non-aqueous electrolyte solution for a lithium secondary battery of claim 1, wherein the compound represented by Formula 1 is present in an amount of 0.3 wt% to 5 wt% based on the total weight of the non-aqueous electrolyte solution for a lithium secondary battery.

7. The non-aqueous electrolyte solution for a lithium secondary battery of claim 1, wherein the compound represented by Formula 1 is present in an amount of 0.5 wt% to 3 wt% based on the total weight of the non-aqueous electrolyte solution for a lithium secondary battery.

8. The non-aqueous electrolyte solution for a lithium secondary battery of claim 1, comprising other additives, wherein the other additives is at least one selected from the group consisting of a cyclic carbonate-based compound, a halogen-substituted carbonate-based compound, a sultone-based compound, a sulfate-based compound, a phosphate-based or phosphite-based compound, a borate-based compound, a benzene-based compound, an amine-based compound, a silane-based compound, and a lithium salt-based compound.

9. A lithium secondary battery comprising:
a negative electrode, a positive electrode, a separator disposed between the negative electrode and the positive electrode; and the non-aqueous electrolyte solution for a lithium secondary battery of claim 1.

10. The lithium secondary battery of claim 9, wherein the positive electrode comprises a positive electrode active material including at least one selected from the group consisting of a lithium-cobalt oxide, a lithium-manganese-based oxide, a lithium-nickel-manganese-cobalt-based oxide, and a lithium-nickel-cobalt-transition metal (M) oxide.

**Patentansprüche**

1. Nichtwässrige Elektrolytlösung für eine Lithiumsekundärbatterie, wobei die nichtwässrige Elektrolytlösung umfasst:

ein Lithiumsalz,
ein nichtwässriges organisches Lösungsmittel und
eine durch Formel 1 dargestellte Verbindung:

[Formel 1]

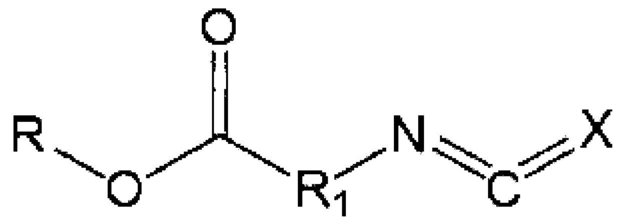

in Formel 1
ist R eine substituierte oder unsubstituierte Alkylgruppe mit 1 bis 6 Kohlenstoffatomen, eine substituierte oder unsubstituierte Alkenylgruppe mit 1 bis 6 Kohlenstoffatomen oder eine substituierte oder unsubstituierte Alkinylgruppe mit 1 bis 6 Kohlenstoffatomen,
$R_1$ ist eine Alkylengruppe mit 1 bis 3 Kohlenstoffatomen und
X ist S.

2. Nichtwässrige Elektrolytlösung für eine Lithiumsekundärbatterie nach Anspruch 1, wobei in Formel 1 R eine substituierte oder unsubstituierte Alkylgruppe mit 1 bis 6 Kohlenstoffatomen oder eine substituierte oder unsubstituierte Alkinylgruppe mit 1 bis 6 Kohlenstoffatomen ist.

3. Nichtwässrige Elektrolytlösung für eine Lithiumsekundärbatterie nach Anspruch 1, wobei in Formel 1 R eine substituierte oder unsubstituierte Alkylgruppe mit 1 bis 4 Kohlenstoffatomen oder eine substituierte oder unsubstituierte Alkinylgruppe mit 1 bis 4 Kohlenstoffatomen ist.

4. Nichtwässrige Elektrolytlösung für eine Lithiumsekundärbatterie nach Anspruch 1, wobei in Formel 1 der substituierbare Substituent mindestens eines, ausgewählt aus der Gruppe, bestehend aus einer Alkylgruppe mit 1 bis 4 Kohlenstoffatomen und mindestens einem Fluor, ausgewählt ist.

5. Nichtwässrige Elektrolytlösung für eine Lithiumsekundärbatterie nach Anspruch 1, wobei die durch Formel 1 dargestellte Verbindung mindestens eine der durch die nachstehende Formel 1-3 bis Formel 1-4 ist:

[Formel 1-3]

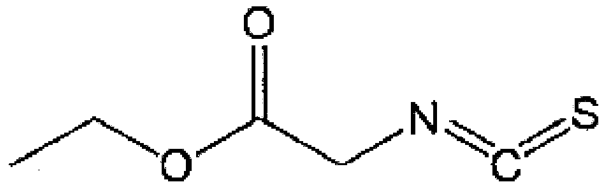

[Formel 1-4]

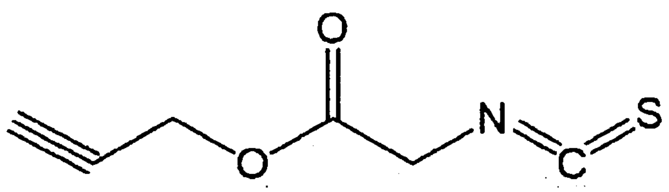

.

6. Nichtwässrige Elektrolytlösung für eine Lithiumsekundärbatterie nach Anspruch 1, wobei die durch Formel 1 dargestellte Verbindung in einer Menge von 0,3 Gew.-% bis 5 Gew.-%, bezogen auf das Gesamtgewicht der nichtwässrigen Elektrolytlösung für eine Lithiumsekundärbatterie, vorhanden ist.

7. Nichtwässrige Elektrolytlösung für eine Lithiumsekundärbatterie nach Anspruch 1, wobei die durch Formel 1 dargestellte Verbindung in einer Menge von 0,5 Gew.-% bis 3 Gew.-%, bezogen auf das Gesamtgewicht der nichtwässrigen Elektrolytlösung für eine Lithiumsekundärbatterie, vorhanden ist.

8. Nichtwässrige Elektrolytlösung für eine Lithiumsekundärbatterie nach Anspruch 1, umfassend weitere Additive, wobei die weiteren Additive mindestens eine, ausgewählt aus der Gruppe, bestehend aus einer Verbindung auf Basis eines cyclischen Carbonats, einer Verbindung auf Basis eines halogensubstituierten Carbonats, einer Verbindung auf Sultonbasis, einer Verbindung auf Sulfatbasis, einer Verbindung auf Phosphatbasis oder Phosphitbasis, einer Verbindung auf Boratbasis, einer Verbindung auf Benzolbasis, einer Verbindung auf Aminbasis, einer Verbindung auf Silanbasis und einer Verbindung auf Lithiumsalzbasis, sind.

9. Lithiumsekundärbatterie, umfassend:
eine negative Elektrode, eine positive Elektrode, einen Separator, der zwischen der negativen Elektrode und der positiven Elektrode angeordnet ist, und die nichtwässrige Elektrolytlösung für eine Lithiumsekundärbatterie nach Anspruch 1.

10. Lithiumsekundärbatterie nach Anspruch 9, wobei die positive Elektrode ein Aktivmaterial für eine positive Elektrode umfasst, das mindestens eines ausgewählt aus der Gruppe, bestehend aus einem Lithium-Cobalt-Oxid, einem Oxid auf Lithium-Mangan-Basis, einem Oxid auf Lithium-Nickel-Mangan-Cobalt-Basis und einem Lithium-Nickel-Cobalt-Übergangsmetall (M)-Oxid, einschließt.

**Revendications**

1. Solution électrolytique non aqueuse pour une batterie secondaire au lithium, la solution électrolytique non aqueuse comprenant :

   un sel de lithium ;
   un solvant organique non aqueux ; et
   un composé représenté par la Formule 1 :

[Formule 1]

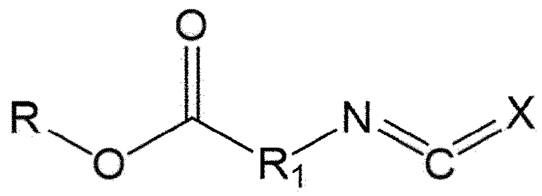

   Dans la Formule 1,
   R est un groupe alkyle substitué ou non substitué présentant de 1 à 6 atomes de carbone, un groupe alcényle substitué ou non substitué présentant de 1 à 6 atomes de carbone, ou un groupe alcynyle substitué ou non substitué présentant de 1 à 6 atomes de carbone,
   $R_1$ est un groupe alkylène présentant de 1 à 3 atomes de carbone, et
   X est S.

2. Solution électrolytique non aqueuse pour une batterie secondaire au lithium selon la revendication 1, dans laquelle, dans la Formule 1, R est un groupe alkyle substitué ou non substitué présentant de 1 à 6 atomes de carbone ou un groupe alcynyle substitué ou non substitué présentant de 1 à 6 atomes de carbone.

3. Solution électrolytique non aqueuse pour une batterie secondaire au lithium selon la revendication 1, dans laquelle, dans la Formule 1, R est un groupe alkyle substitué ou non substitué présentant de 1 à 4 atomes de carbone ou un groupe alcynyle substitué ou non substitué présentant de 1 à 4 atomes de carbone.

4. Solution électrolytique non aqueuse pour une batterie secondaire au lithium selon la revendication 1, dans laquelle, dans la Formule 1, le substituant substituable est au moins un élément choisi dans le groupe consistant en un groupe alkyle présentant de 1 à 4 atomes de carbone et au moins une fluorine.

**5.** Solution électrolytique non aqueuse pour une batterie secondaire au lithium selon la revendication 1, dans laquelle le composé représenté par la Formule 1 est au moins un composé représenté par la Formule 1-3 à la Formule 1-4 ci-dessous :

[Formule 1-3]

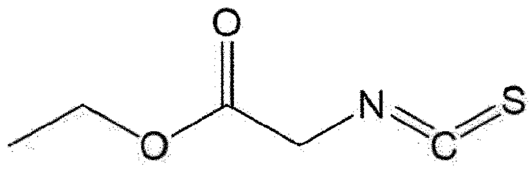

[Formule 1-4]

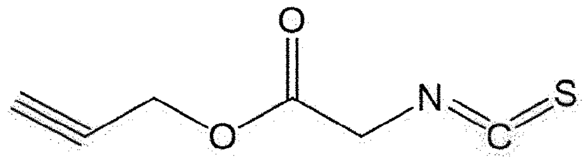

.

**6.** Solution électrolytique non aqueuse pour une batterie secondaire au lithium selon la revendication 1, dans laquelle le composé représenté par la Formule 1 est présent en une quantité comprise entre 0,3 % en poids et 5 % en poids sur la base du poids total de la solution électrolytique non aqueuse pour une batterie secondaire au lithium.

**7.** Solution électrolytique non aqueuse pour une batterie secondaire au lithium selon la revendication 1, dans laquelle le composé représenté par la Formule 1 est présent en une quantité comprise entre 0,5 % en poids et 3 % en poids sur la base du poids total de la solution électrolytique non aqueuse pour une batterie secondaire au lithium.

**8.** Solution électrolytique non aqueuse pour une batterie secondaire au lithium selon la revendication 1, comprenant d'autres additifs, dans laquelle les autres additifs sont au moins un élément choisi dans le groupe consistant en un composé à base de carbonate cyclique, un composé à base de carbonate substitué par un halogène, un composé à base de sultone, un composé à base de sulfate, un composé à base de phosphate ou un composé à base de phosphite, un composé à base de borate, un composé à base de benzène, un composé à base d'amine, un composé à base de silane et un composé à base de sel de lithium.

**9.** Batterie secondaire au lithium comprenant :
une électrode négative, une électrode positive, un séparateur disposé entre l'électrode négative et l'électrode positive ; et la solution électrolytique non aqueuse pour une batterie secondaire au lithium selon la revendication 1.

**10.** Batterie secondaire au lithium selon la revendication 9, dans laquelle l'électrode positive comprend un matériau actif d'électrode positive incluant au moins un élément choisi dans le groupe consistant en un oxyde à base de lithium-cobalt, un oxyde à base de lithium-manganèse, un oxyde à base de lithium-nickel-manganèse-cobalt, et un oxyde de métal de transition (M) lithium-nickel-cobalt.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210142019
- CN 111740162